(19)

Europäisches Patentamt
European Patent Office
Office européen des brevets

(11)     **EP 4 737 246 A1**

(12)     **EUROPEAN PATENT APPLICATION**
published in accordance with Art. 153(4) EPC

(43) Date of publication:
**06.05.2026   Bulletin 2026/19**

(21) Application number: **24835314.6**

(22) Date of filing: **01.07.2024**

(51) International Patent Classification (IPC):
**B60W 30/18** (2012.01)        **B60W 50/00** (2006.01)

(86) International application number:
**PCT/CN2024/102833**

(87) International publication number:
**WO 2025/007833 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **04.07.2023   CN 202310817707**

(71) Applicant: **Guangzhou Xiaopeng Autopilot
Technology Co., Ltd.
Guangzhou Guangdong 510000 (CN)**

(72) Inventors:
• **XU, Shaolin**
  **Guangzhou, Guangdong 510000 (CN)**

• **FAN, Qi**
  **Guangzhou, Guangdong 510000 (CN)**
• **WANG, Yizhou**
  **Guangzhou, Guangdong 510000 (CN)**
• **QIU, Jie**
  **Guangzhou, Guangdong 510000 (CN)**
• **LI, Liyun**
  **Guangzhou, Guangdong 510000 (CN)**

(74) Representative: **Ran, Handong et al
Maucher Jenkins
Seventh Floor Offices
Artillery House
11-19 Artillery Row
London SW1P 1RT (GB)**

(54)     **CONTINUOUS LANE CHANGE CONTROL METHOD, APPARATUS AND SYSTEM, AND COMPUTER READABLE STORAGE MEDIUM**

(57)     The present application discloses a continuous lane change control method, apparatus and system, and a computer readable storage medium. The method comprises: when a lane change instruction is received in the process of a vehicle being traveling in a first lane, determining a target lane on the basis of the lane change instruction, there being at least one second lane between the first lane and the target lane; when a lane change condition is met, controlling the vehicle to change from the first lane to the second lane adjacent to the first lane, and determining whether a continuous lane change condition is met; and if the continuous lane change condition is met, controlling the vehicle to perform continuous lane change until the vehicle changes to the target lane. According to the present application, when it is determined that a continuous lane change condition is met in a lane change process, a vehicle is controlled to perform continuous lane change; and the vehicle sequentially changes to an adjacent lane so as to gradually change to the final target lane, thereby avoiding danger caused by the limitation of sensors, and improving the safety of continuous lane change control.

Determining a target lane according to a lane change instruction, when the lane change instruction is received while a vehicle is traveling in a first lane, wherein there is at least one second lane between the first lane and the target lane — S10

Controlling the vehicle to change lanes from the first lane to the second lane adjacent to the first lane when a lane change condition is met, and judging whether a continuous lane change condition is met — S20

Controlling the vehicle to perform the continuous lane change if the continuous lane change condition is met, until the vehicle changes lanes to the target lane — S30

FIG. 2

## Description

This application claims priority to Chinese Patent Application No. 2023108177070, filed with the China National Intellectual Property Administration on July 4, 2023 and entitled "CONTINUOUS LANE CHANGE CONTROL METHOD, APPARATUS AND SYSTEM, AND COMPUTER READABLE STORAGE MEDIUM", which is incorporated herein by reference in its entirety.

## TECHNICAL FIELD

This application relates to the field of assisted driving technology, and in particular to a continuous lane change control method, apparatus and system, and computer readable storage medium.

## BACKGROUND

In high-speed NGP (Navigation Guided Pilot) or city assisted CNGP (City Navigation Guided Pilot) navigation scenarios, a vehicle needs to change multiple lanes to reach a target lane according to navigation instructions, so as to perform actions such as making left turns or right turns, or entering or exiting ramps at the starting point of a curve ahead of the target lane. However, when the longitudinal distance that the vehicle can change lanes to the target lane is short, continuous lane changes are required to avoid the vehicle missing the starting point of the curve in front of the target lane.

A continuous lane change scheme in the related art is as follows: when a vehicle needs to initiate a continuous lane change, a final target lane is directly selected as the target lane for lane change, such that the vehicle crosses multiple lanes at one time to complete the goal of changing multiple lanes. However, in the continuous lane change scheme of the related art, the lateral distance for the vehicle to change lanes is relatively long. Due to the limitations in sensors' sensing range and accuracy, misidentification and misjudgment of vehicles in distant side lanes are likely to occur, which brings danger to the vehicle and other vehicles, resulting in low safety of continuous lane change.

Therefore, improving the safety of continuous lane change is an urgent issue that needs to be addressed.

## SUMMARY

In order to solve or partially solve the problems existing in the related art, this application provides a continuous lane change control method, apparatus and system, and computer readable storage medium, aiming to improve the safety of continuous lane change.

To achieve the above object, this application provides a continuous lane change control method, which includes the following steps:

determining a target lane based on a lane change instruction, when the lane change instruction is received while a vehicle is traveling in a first lane, wherein there is at least one second lane between the first lane and the target lane;

controlling the vehicle to change lanes from the first lane to the second lane adjacent to the first lane when a lane change condition is met, and determining whether a continuous lane change condition is met; and

if the continuous lane change condition is met, controlling the vehicle to perform a continuous lane change until the vehicle reaches the target lane.

In an embodiment, before the step of determining whether the continuous lane change condition is met, the method further includes:

acquiring a current position of the vehicle and an end position of the target lane, and determining a remaining lane change distance based on the current position and the end position, wherein the end position is a starting point of a curve of the target lane; and

if the remaining lane change distance is less than a first preset distance threshold, executing the step of determining whether the continuous lane change condition is met.

In an embodiment, the step of determining whether the continuous lane change condition is met includes:

determining whether there is a lane in a direction of the target lane from the second lane adjacent to the first lane, whether a lane line on a side of the second lane adjacent to the first lane away from the first lane is a lane line that permits lane change, and whether there is space for lane change in current road conditions;

determining that the continuous lane change condition is met if there is a lane in the direction of the target lane from the second lane adjacent to the first lane, the lane line on the side of the second lane adjacent to the first lane away from the first lane permits lane change, and there is space for lane change in the current road conditions; and

determining that the continuous lane change condition is not met if there is no lane in the direction of the target lane from the second lane adjacent to the first lane, or the lane line on the side of the second lane adjacent to the first lane away from the first lane does not permit lane change, or there is no space for lane change in the current road conditions.

In an embodiment, after the step of determining that the continuous lane change condition is not met, the method further includes:

acquiring driving information of the vehicle, and determining whether the vehicle has completed the lane change from the first lane to the second lane adjacent to the first lane based on the driving information;

if the lane change has not been completed, re-executing the step: determining whether the continuous lane change condition is met;

if the lane change has been completed, designating the current lane of the vehicle as a new first lane, and when it is determined that there is at least one second lane between the new first lane and the target lane, re-executing the step: controlling the vehicle to change lanes from the first lane to the second lane adjacent to the first lane when the lane change condition is met, and determining whether the continuous lane change condition is met.

In an embodiment, the step of controlling the vehicle to perform the continuous lane change until the vehicle reaches the target lane if the continuous lane change condition is met includes:

if the continuous lane change condition is met, determining a lane change trajectory;

controlling the vehicle to perform the continuous lane change from a current position to a next second lane according to the lane change trajectory, and continuing to determine whether the continuous lane change condition is met, the next second lane being an adjacent lane of the second lane adjacent to the first lane in the direction of the target lane; and

controlling the vehicle to change lanes to the target lane until it is determined that the next second lane is the target lane.

In an embodiment, the step of determining the lane change trajectory includes:

acquiring current driving state information of the vehicle at the current position, expected driving state information of the vehicle at a target position, and current road conditions information corresponding to the next second lane, and determining the target position on the next second lane based on the current driving state information, the expected driving state information, and the current road conditions information;

determining a first curvature of the vehicle at the current position based on the current driving state information, and determining a second curvature of the vehicle at the target position based on the expected driving state information;

determining a set of planned trajectories based on the first curvature, the second curvature, the current position, and the target position, and calculating a curvature change rate of each planned trajectory in the set of planned trajectories; and

comparing the curvature change rates of the planned trajectories, and determining the planned trajectory with the smallest curvature change rate as a lane-changing trajectory based on a comparison result.

In an embodiment, the step of controlling the vehicle to change lanes to the target lane includes:

obtaining position information and a heading angle of the vehicle;

calculating a distance between the position information and a center line of the target lane, comparing the distance with a second preset distance threshold, and comparing the heading angle with a preset angle threshold; and

determining that the vehicle has completed the lane change to the target lane, if the distance is less than the second preset distance threshold and the heading angle is less than the preset angle threshold.

In addition, to achieve the above-mentioned purpose, the present application also provides a continuous lane change control apparatus, the continuous lane change control apparatus comprising:

a determining module, configured to determine a target lane based on a lane change instruction, when the lane change instruction is received while a vehicle is traveling in a first lane, wherein there is at least one second lane between the first lane and the target lane;

a determination module, configured to control the vehicle to change lanes from the first lane to the second lane adjacent to the first lane when a lane change condition is met, and to determine whether a continuous lane change condition is met; and

a controlling module, configured to, if the continuous lane change condition is met, control the vehicle to perform continuous lane change until the vehicle changes lanes to the target lane.

In an embodiment, the determination module is further configured to:

acquire a current position of the vehicle and an end position of the target lane, and determine a remaining lane change distance based on the current position and the end position, wherein the end position is a starting point of a curve of the target lane; and

if the remaining lane change distance is less than a first preset distance threshold, execute the step of determining whether the continuous lane change condition is met.

In an embodiment, the determination module is further configured to:

determine whether there is a lane in a direction of the target lane from the second lane adjacent to the first lane, whether a lane line on a side of the second lane adjacent to the first lane away from the first lane is a lane line that permits lane change, and whether there is space for a lane change in current road conditions; determine that the continuous lane change condition is met, if there is a lane in the direction of the target lane from the second lane adjacent to the first lane, the lane line on the side of the second lane adjacent to the first lane away from the first lane permits lane change, and there is space for lane change in the current road conditions; and
determine that the continuous lane change condition is not met, if there is no lane in the direction of the target lane from the second lane adjacent to the first lane, or the lane line on the side of the second lane adjacent to the first lane away from the first lane does not permit lane change, or there is no space for lane change in the current road conditions.

In an embodiment, the determination module is further configured to:

acquire driving information of the vehicle, and determine whether the vehicle has completed the lane change from the first lane to the second lane adjacent to the first lane based on the driving information; if the lane change has not been completed, re-execute the step of determining whether the continuous lane change condition is met; if the lane change has been completed, designating the current lane of the vehicle as a new first lane, and when it is determined that there is at least one second lane between the new first lane and the target lane, re-execute the steps of controlling the vehicle to change lanes from the first lane to the second lane adjacent to the first lane when the lane change condition is met and determining whether the continuous lane change condition is met.

In an embodiment, the controlling module is further configured to:

if the continuous lane change condition is met, determine a lane change trajectory; control the vehicle to perform the continuous lane change from a current position to a next second lane according to the lane change trajectory, and continue to determine whether the continuous lane change condition is met, the next second lane being an adjacent lane of the second lane adjacent to the first lane in the direction of the target lane; and control the vehicle to change lanes to the target lane until it is determined that the next second lane is the target lane.

In an embodiment, the controlling module further includes a determining module configured to:

acquire current driving state information of the vehicle at the current position, expected driving state information of the vehicle at the target position, and current road conditions information corresponding to the next second lane, and determine the target position on the next second lane based on the current driving state information, the expected driving state information, and the current road conditions information;
determine a first curvature of the vehicle at the current position based on the current driving state information, and determine a second curvature of the vehicle at the target position based on the expected driving state information;
determine a set of planned trajectories based on the first curvature, the second curvature, the current position, and the target position, and calculate a curvature change rate of each planned trajectory in the set of planned trajectories;
compare the curvature change rates of the planned trajectories, and determine the planned trajectory with the smallest curvature change rate as a lane-changing trajectory based on a comparison result.

In an embodiment, the controlling module further includes a calculating module configured to:

obtain position information and a heading angle of the vehicle;
calculate a distance between the position information and a center line of the target lane, compare the distance with a second preset distance threshold, and compare the heading angle with a preset angle threshold; and
determine that the vehicle has completed the lane change to the target lane, if the distance is less than the second preset distance threshold and the heading angle is less than the preset angle threshold.

In addition, to achieve the above-mentioned purpose, the present application also provides a continuous lane change control system, which includes: a memory, a processor, and a continuous lane change control program stored in the memory and executable on the processor, and the continuous lane change control program implementing the steps of the continuous lane change control method as described above when executed by the processor.
In addition, to achieve the above-mentioned purpose, the present application also provides a computer-readable storage medium having stored thereon a continuous lane change control program which, when executed by a processor, causes the processor to carry out the steps of the continuous lane change control method as described above.
The continuous lane change control method proposed in the present application controls a vehicle to change lanes from a first lane to an adjacent second lane in a direction toward a target lane, and continuously determines whether a continuous lane change condition is met before completing the lane change. When the continuous lane change condition is met, the vehicle is controlled to change lanes continuously from a current position to a next second lane in the direction toward the target lane from the second lane adjacent to the first lane, so that the vehicle gradually changes lanes to the target lane, thereby avoiding the danger caused by the limitation of the sensor perception range and accuracy due to directly and continuously crossing multiple lanes to change lanes to the target lane. This improves the safety of the vehicle's continuous lane change. The vehicle changes lanes to a side lane in turn, and at the same time, determines a planned trajectory with a smaller curvature change rate as a lane change trajectory. The smaller the curvature change rate, the gentler the curvature of the corresponding lane change trajectory, thereby avoiding a drastic change in the vehicle state caused by a large jump in the curvature of the vehicle's lane change trajectory, and improving the comfort of the driver and passengers.

## DESCRIPTION OF THE DRAWINGS

The above and other objects, features and advantages of the present application will become more apparent through a more detailed description of exemplary embodiments of the present application in conjunction with the accompanying drawings, wherein the same reference numerals generally represent the same components in the exemplary embodiments of the present application.

FIG. 1 is a schematic diagram of the device structure of the hardware operating environment involved in the embodiments of the present application;
FIG. 2 is a flow chart of a first embodiment of the continuous lane change control method of the present application;
FIG. 3 is a schematic diagram of a vehicle of the present application changing lanes from a first lane to a second lane adjacent to the first lane;
FIG. 4 is a flow chart of a second embodiment of the continuous lane change control method of the present application;
FIG. 5 is a schematic diagram of a remaining lane change distance of the present application;
FIG. 6 is a flow chart of a third embodiment of the continuous lane change control method of the present application;
FIG. 7 is a schematic diagram of continuous lane change of the vehicle in the present application;
FIG. 8 is a flow chart of a fourth embodiment of the continuous lane change control method of the present application;
FIG. 9 is a schematic diagram of the vehicle completing continuous lane change in the present application;

cation;
FIG. 10 is a schematic diagram of the structure of the continuous lane change control apparatus of the present application.

## DESCRIPTION OF EMBODIMENTS

The embodiments of the present application will be described in more detail below with reference to the accompanying drawings. Although the embodiments of the present application are shown in the accompanying drawings, it should be understood that the present application can be implemented in various forms and should not be limited by the embodiments described herein. On the contrary, these embodiments are provided to make the present application more thorough and complete, and to fully convey the scope of the present application to those skilled in the art.

The terms used in this application are for the purpose of describing specific embodiments only and are not intended to limit this application. The singular forms of "a", "said" and "the" used in this application and the appended claims are also intended to include plural forms unless the context clearly indicates other meanings. It should also be understood that the term "and/or" used herein refers to and includes any or all possible combinations of one or more associated listed items.

The present application is described in detail below, and examples of the present application are shown in the accompanying drawings, wherein the same or similar reference numerals throughout represent the same or similar elements or elements having the same or similar functions. The embodiments described below with reference to the accompanying drawings are exemplary and are intended to be used to explain the present application, and should not be construed as limiting the present application.

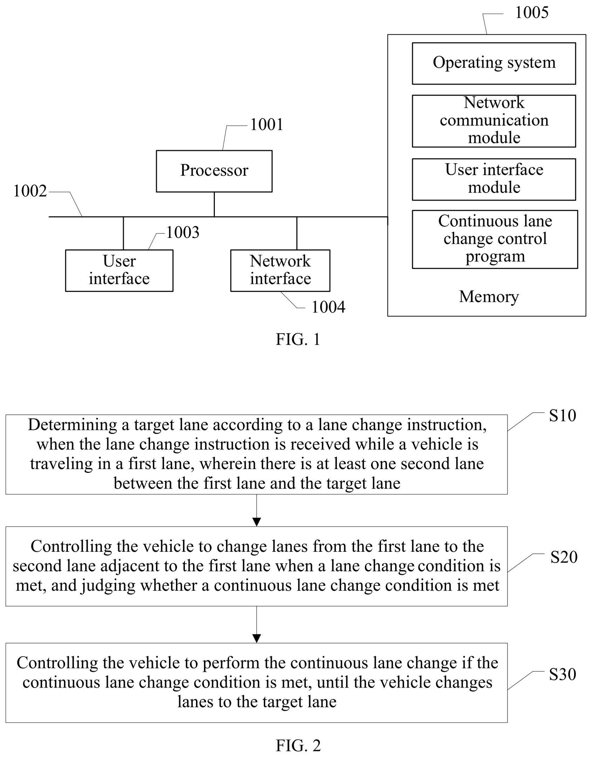

As shown in FIG. 1, FIG. 1 is a schematic diagram of the device structure of the hardware operating environment involved in the embodiments of the present application.

The device in the embodiment of the present application may be a PC or a server device.

As shown in FIG. 1, the device may include: a processor 1001, such as a CPU, a network interface 1004, a user interface 1003, a memory 1005, and a communication bus 1002. Among them, the communication bus 1002 is used to realize the connection and communication between these components. The user interface 1003 may include a display screen (Display), an input unit such as a keyboard (Keyboard), and the optional user interface 1003 may also include a standard wired interface or a wireless interface. The network interface 1004 may optionally include a standard wired interface or a wireless interface (such as a WI-FI interface). The memory 1005 may be a high-speed RAM memory, or a stable memory (non-volatile memory), such as a disk memory. The memory 1005 may also be a storage device independent of the processor 1001.

Those skilled in the art will appreciate that the device structure shown in FIG. 1 does not constitute a limitation on the device, and may include more or fewer components than shown, or a combination of certain components, or a different arrangement of components.

As shown in FIG. 1, the memory 1005 as a computer storage medium may include an operating system, a network communication module, a user interface module, and a continuous lane change control program.

The operating system is a program for managing and controlling the portable continuous lane change control system and software resources, supporting the operation of the network communication module, the user interface module, the continuous lane change control program and other programs or software. The network communication module is used to manage and control the network interface 1004. The user interface module is used to manage and control the user interface 1003.

In the continuous lane change control system shown in FIG. 1, the continuous lane change control system calls the continuous lane change control program stored in the memory 1005 through the processor 1001 and executes the operations in each embodiment of the following continuous lane change control method.

Based on the above hardware structure, embodiments of the continuous lane change control method of the present application are proposed.

Referring to FIG. 2, FIG. 2 is a flow chart of a first embodiment of the continuous lane change control method of the present application. The continuous lane change control method of the present embodiment is applied to a continuous lane change control system, which can be applied to devices such as smart cars, smart terminals, and PC terminals. The present application is applied to scenarios involving high-speed NGP navigation or city assisted CNGP navigation. When a longitudinal distance that a vehicle can change lanes to the target lane is short, a continuous lane change to the target lane is required. The method includes steps S10 to S30.

Step S10, determining a target lane based on a lane change instruction, when the lane change instruction is received while a vehicle is traveling in a first lane, wherein there is at least one second lane between the first lane and the target lane.

In this embodiment, while the vehicle is traveling in the first lane, the continuous lane change control system receives a lane change instruction sent by the high-speed NGP navigation system or the city assisted CNGP navigation system in the vehicle, and determines the target lane according to the lane change instruction. There is at least one second lane between the first lane and the target lane. For example, when the high-speed NGP navigation system or the city assisted CNGP navigation system in the vehicle determines that the vehicle needs to change lanes to the target lane, but there is at least one second lane between the first lane where the vehicle is located and the target lane, and the longitudinal distance between the current position of the vehicle and the starting point of the curve in front of the target lane is short, the continuous lane change control system sends a lane change instruction to the continuous lane change control system in the vehicle. The continuous lane change control system then determines the final target lane that the vehicle is to reach based on the lane change instruction.

Step S20, controlling the vehicle to change lanes from the first lane to the second lane adjacent to the first lane when a lane change condition is met, and determining whether a continuous lane change condition is met.

In this embodiment, after determining the target lane, the continuous lane change control system determines the second lane adjacent to the first lane where the vehicle is located in the direction of the target lane as the lane that the vehicle currently needs to reach. The system obtains information such as the remaining lane change distance, vehicle speed, and the traffic speed on the lane that the vehicle currently needs to reach; and then determines whether the lane change condition is met at the current moment based on the remaining navigation distance, vehicle speed, and the traffic speed on the lane that the vehicle currently needs to reach. When the lane change condition is met, the vehicle is controlled to change lanes from the first lane to the second lane adjacent to the first lane. Before the vehicle completes the lane change from the first lane to the second lane adjacent to the first lane, the system continuously checks if the continuous lane change condition is met. For example, the remaining lane change distance is the longitudinal distance between the current position of the vehicle and the starting point of the curve in front of the target lane.

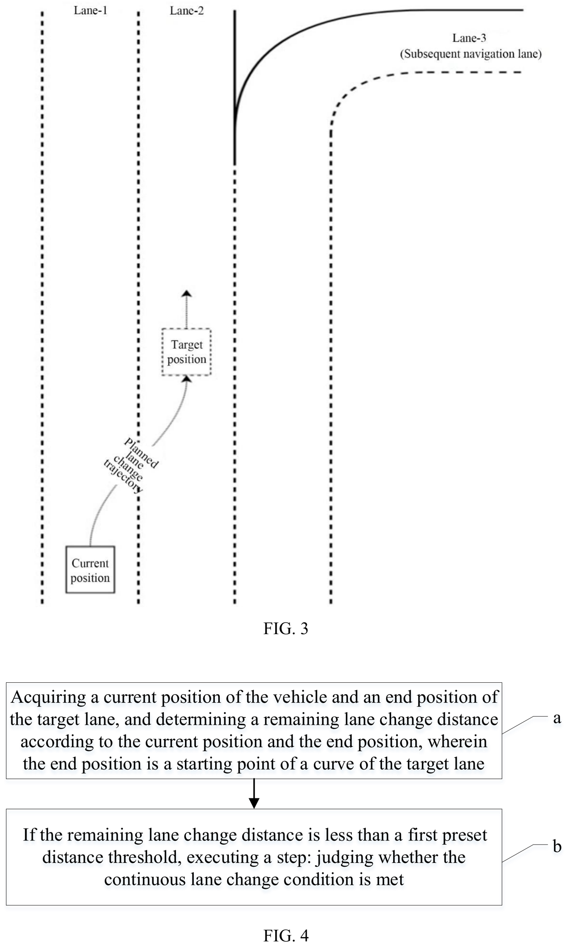

Exemplarily, as shown in FIG. 3, the vehicle is traveling in lane-1 (the first lane), and due to navigation guidance, the vehicle needs to change lanes to lane-3 (the target lane). When the lane change condition is met, the continuous lane change control system generates a planned lane change trajectory based on the current position of the vehicle and the target position of the vehicle, and controls the vehicle to change lanes from lane-1 to lane-2 according to the planned lane change trajectory. When the vehicle starts to change lanes and during the lane changing process, the continuous lane change control system continuously determines whether the continuous lane change condition is met.

For example, the step of determining whether the continuous lane change condition is met includes steps S201 to S203.

Step S201, determining whether there is a lane in a direction of the target lane from the second lane adjacent to the first lane, whether a lane line on the side of the second lane adjacent to the first lane away from the first lane is a lane line that permits lane change, and whether there is space for lane change in current road conditions.

In this step, the continuous lane change control system obtains the current road surface information and the current road conditions, and determines whether there is a lane in the direction of the target lane from the second lane adjacent to the first lane, whether the lane line on the side of the second lane adjacent to the first lane away from the first lane is a lane line permitting lane change, and whether there is space for lane change in the current road conditions. The system then determines whether the continuous lane change condition is met. For example, the current road surface information includes: lane information, lane line information, etc., and the current road conditions information includes: vehicle speed, traffic speed in the side lane, etc.

Exemplarily, the continuous lane change control system determines whether there is a lane in the direction of the target lane from the second lane adjacent to the first lane based on the lane information, determines whether the lane line of the second lane adjacent to the first lane away from the first lane permits lane change based on the lane line information, and determines whether there is space for lane change in the current road conditions based on the vehicle speed and the traffic speed of the adjacent lane.

Step S202, determining that the continuous lane change condition is met, if there is a lane in the direction of the target lane from the second lane adjacent to the first lane, the lane line on the side of the second lane adjacent to the first lane away from the first lane permits lane change, and there is space for lane change in the current road conditions.

In this step, the continuous lane change control system determines that the continuous lane change condition is met if it determines that there is a lane between the second lane adjacent to the first lane and the target lane, the lane line of the second lane adjacent to the first lane away from the first lane is a changeable lane line permitting lane change, and there is space for lane change in the current road conditions.

Exemplarily, as shown in FIG. 3, assuming that there is a middle lane (not shown in the figure) in the direction from lane-2 (the second lane adjacent to the first lane) to lane-3 (the target lane), the lane line between lane-2 and the middle lane is a dotted line (or combination of dotted and solid lines), and there is space for lane change in the current road conditions, the continuous lane change control system determines that the continuous lane change condition is currently met.

Exemplarily, as shown in FIG. 3, if there is only lane-3 in the direction from lane-2 (the second lane adjacent to the first lane) to lane-3 (the target lane), the lane line between lane-2 and lane-3 is a dotted line (or combination of dotted and solid lines), and there is space for lane change in the current road conditions, then the continuous lane change control system determines that the continuous lane change condition is currently met.

Step S203, determining that the continuous lane change condition is not met if there is no lane in the direction of the target lane from the second lane adjacent to the first lane, or the lane line on the side of the second lane adjacent to the first lane away from the first lane does not permit lane change, or there is no space for lane change in the current road conditions.

In this step, if the continuous lane change control system determines that there is no lane in the direction of the target lane from the second lane adjacent to the first lane, the lane line on the side of the second lane adjacent to the first lane away from the first lane does not permit lane change, or there is no space for lane change in the current road conditions, then it is determined that the continuous lane change condition is not met. For example, if the vehicle is currently located at a narrowing section of the road, where there are only the first lane and the second lane adjacent to the first lane on the road, and only after passing through this narrowing section will lanes appear in the direction from the second lane adjacent to the first lane toward the target lane, the continuous lane change control system then determines that there is no lane in the direction of the target lane from the second lane adjacent to the first lane. If the lane line on the side of the second lane adjacent to the first lane away from the first lane is a solid line, the continuous lane change control system determines that the lane line on the side of the second lane adjacent to the first lane away from the first lane is not a changeable lane line that permits lane change. If the current road conditions are congested, the continuous lane change control system will determine that there is no space for lane change in the current road conditions.

In an embodiment, after the step of determining that the continuous lane change condition is not met, the method further includes steps S204 to S206.

Step S204, acquiring driving information of the vehicle, and determining whether the vehicle has completed the lane change from the first lane to the second lane adjacent to the first lane based on the driving information.

In this step, the continuous lane change control system obtains the vehicle's driving information, which includes the vehicle's position information and heading angle, calculates the distance between the vehicle and the center line of the second lane adjacent to the first lane based on the position information, and determines whether the vehicle has completed the lane change from the first lane to the second lane adjacent to the first lane based on the distance and heading angle.

Step S205, if the lane change has not been completed, re-executing the step of determining whether the continuous lane change condition is met.

In this step, if the continuous lane change control system determines that the vehicle has not completed the lane change from the first lane to the second lane adjacent to the first lane, it continues to determine whether there is a lane in the direction of the target lane from the second lane adjacent to the first lane, whether the lane line of the second lane adjacent to the first lane away from the first lane is a changeable lane line, and whether there is space for lane change in the current road conditions, and then determines whether the continuous lane change condition is met.

Step S206, if the lane change has been completed, designating the current lane of the vehicle as a new first lane, and when it is determined that there is at least one second lane between the new first lane and the target lane, re-executing the steps of controlling the vehicle to change lanes from the first lane to the second lane adjacent to the first lane when the lane change condition is met, and determining whether the continuous lane change condition is met.

In this step, if the continuous lane change control system determines that the vehicle has completed the lane change from the first lane to the second lane adjacent to the first lane, the current lane of the vehicle is used as the new first lane. When it is determined that there is at least one second lane between the new first lane and the target lane, the following steps are re-executed: if the lane change condition is met, controlling the vehicle is to change from the first lane to the second lane adjacent to the first lane, and determining whether the continuous lane change condition is met. It can be understood that after the vehicle has completed the lane change from the first lane to the second lane adjacent to the first lane, the continuous lane change control system, when determines that the vehicle has not yet reached the target lane, obtains information such as the remaining lane change distance, the vehicle speed, and the traffic speed on the lane that needs to be reached. The system then determines whether the lane change condition is met at the current moment based on the remaining navigation distance, the vehicle speed, and the traffic speed on the lane that needs to be reached. If the lane change condition is met, the vehicle is controlled to change lanes, and whether the continuous lane change condition is met is checked during the lane change process.

Step S30, if the continuous lane change condition is met, controlling the vehicle to perform the continuous lane change until the vehicle reaches the target lane.

In this embodiment, if the continuous lane change control system determines that the continuous lane change condition is met, it controls the vehicle to change lanes continuously from the current position to the side lane adjacent to the first lane in the direction of the target lane. Before the vehicle completes the continuous lane change from the current position to the side lane adjacent to the first lane in the direction of the target lane, the system continues to determine whether the continuous lane change condition is met until the vehicle changes lanes to the target lane.

The continuous lane change control system of this embodiment controls the vehicle to change lanes from the first lane to the adjacent second lane in the direction of the target lane, and continuously determines whether the continuous lane change conditions are met before completing the lane change. When the continuous lane change conditions are met, the vehicle is controlled to change lanes continuously from the current position to the next second lane in the direction of the target lane from the second lane adjacent to the first lane. This allows the vehicle to gradually change lanes to the target lane, avoiding the danger caused by the limitation of sensors' perception range and accuracy when directly and continuously crossing multiple lanes to change to the target lane, thereby improving the safety of the vehicle's continuous lane change.

In an embodiment, referring to FIG. 4, based on the first embodiment of the continuous lane change control method of the present application, a second embodiment of the continuous lane change control method of the present application is proposed.

The second embodiment of the continuous lane change control method is different from the first embodiment of the continuous lane change control method in that, before the step of determining whether the continuous lane change condition is met, the following steps a and b are included.

Step a, acquiring a current position of the vehicle and an end position of the target lane, and determining a remaining lane change distance based on the current position and the end position, wherein the end position is a starting point of a curve of the target lane.

In this embodiment, the continuous lane change control system acquires the current position of the vehicle and the end position of the target lane, and determines the remaining lane change distance based on the current position and the end position. For example, the end position is the starting point of the curve of the target lane, and the remaining lane change distance is the longitudinal distance from the current position of the vehicle to the starting point of the curve of the target lane.

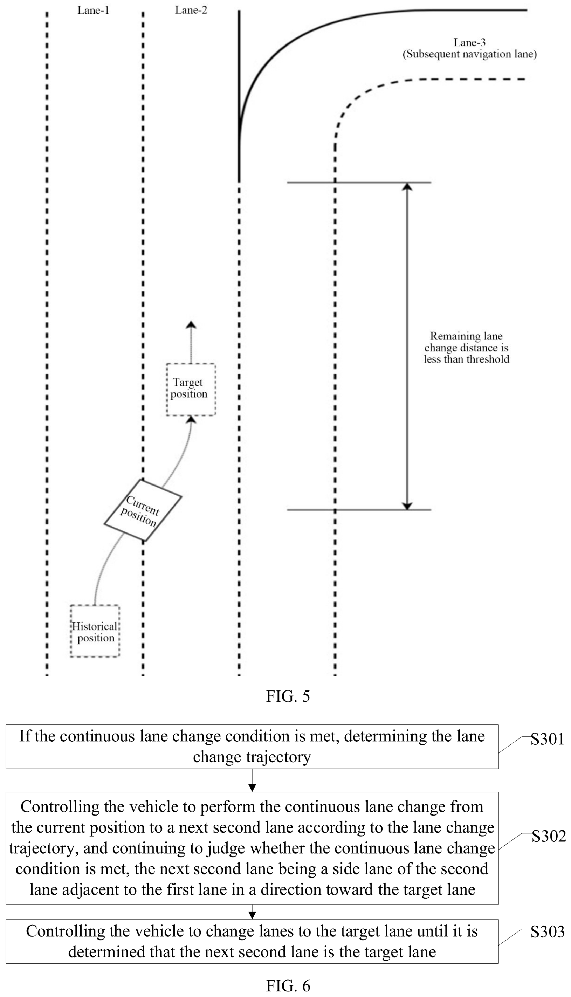

Exemplarily, as shown in FIG. 5, the target lane is lane-3, the end position of lane-3 is the starting point of the right-turn ramp, and the longitudinal distance between the current position of the vehicle and the starting point of the right-turn ramp at the end of the target lane is the remaining lane change distance.

Step b: if the remaining lane change distance is less than a first preset distance threshold, executing the step of determining whether the continuous lane change condition is met.

In this embodiment, after determining the remaining lane change distance, the continuous lane change control system compares the remaining lane change distance with the first preset distance threshold. If the remaining lane change distance is less than the first preset distance threshold, it is determined that the continuous lane change initiation condition is currently met, and then it is determined whether the continuous lane change condition is met. It can be understood that before each determination of whether the continuous lane change condition is met, it is necessary to first determine whether the continuous lane change initiation condition is met.

It should be noted that the calculation formula for the first distance threshold is as follows:

$$D = n \times d_1 + d_2$$

where, D is the first preset distance threshold; n is the number of lane changes required from the first lane to the target lane; $d_1$ is the shortest distance expected for each lane change; $d_2$ is the margin distance left after completing the lane change. Here, $d_1$ ranges from 40 to 60 meters, and $d_2$ ranges from 20 to 40 meters.

The continuous lane change control system of this embodiment obtains the current position of the vehicle and the end position of the target lane, and determines the remaining lane change distance based on the current position and the end position, with the end position being the starting point of the curve of the target lane. If the remaining lane change distance is less than the first preset distance threshold, the step of determining whether the continuous lane change condition is met is performed. Before determining whether the continuous lane change condition is met, a check is performed to determine whether the continuous lane change initiation condition is met based on the remaining lane change distance, thus avoiding blind continuous lane changes and improving the accuracy and safety of continuous lane changes.

In an embodiment, as shown in FIG. 6, based on the first and second embodiments of the continuous lane change control method of the present application, a third embodiment of the continuous lane change control method of the present application is proposed.

The third embodiment of the continuous lane change control method is different from the first embodiment to the second embodiment of the continuous lane change control method in that step S30 includes steps S301 to S303.

Step S301, if the continuous lane change condition is met, determining a lane change trajectory.

In this embodiment, if the continuous lane change control system determines that the continuous lane change condition is currently met, it determines the lane change trajectory; for example, the continuous lane change control system determines the target position on the next second lane in the direction of the target lane from the second lane adjacent to the first lane, and determines the lane change trajectory based on the current position and the target position of the vehicle. It should be noted that the vehicle has not completed the lane change from the first lane to the second lane adjacent to the first lane at this time, that is, the direction of the front of the vehicle is not parallel to the direction of the second lane adjacent to the first lane. The continuous lane change control system uses the current direction of the front of the vehicle as the starting direction for the lane change trajectory, and the expected direction of the front of the vehicle at the target position is parallel to the forward direction of the next second lane. The continuous lane change control system uses the forward direction of the next second lane as the endpoint direction for the lane change trajectory.

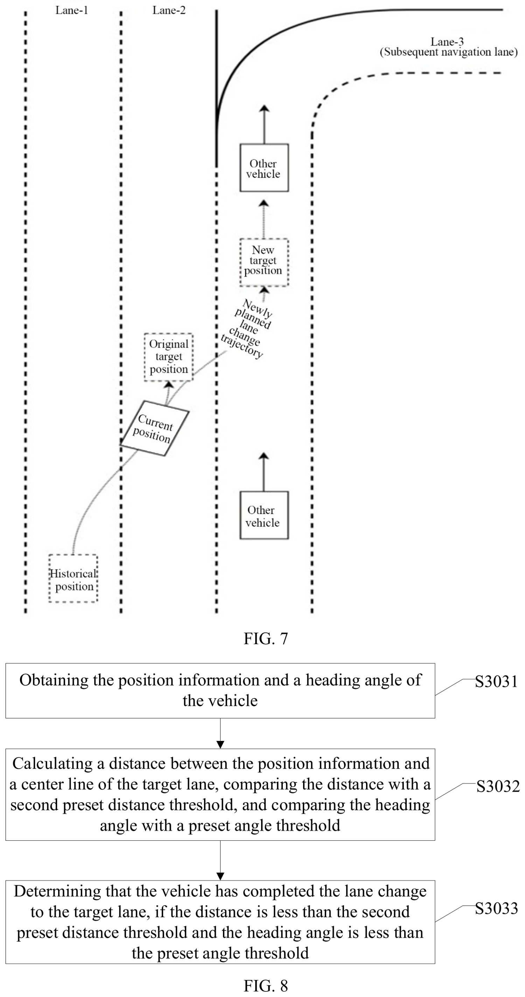

Exemplarily, as shown in FIG. 7, when the vehicle is at the current position (current position of the vehicle), the continuous lane change control system determines that the continuous lane change condition is met. At this time, the target position (new target position of the vehicle) is determined on lane-3. The front of the vehicle at the current position is not parallel to the direction of lane-2, but forms a certain angle with the direction of lane-2, while the front direction of the expected vehicle at the target position is parallel to the direction of lane-3. Based on this, the lane change control system determines the lane change trajectory (newly planned lane change trajectory). The starting direction of the lane change trajectory is the current front direction of the vehicle, and the end direction of the lane change trajectory is the forward direction of the next second lane.

For example, the step of determining the lane change trajectory includes steps S3011 to S3014:
Step S3011, acquiring current driving state information of the vehicle at the current position, expected driving state information of the vehicle at the target position and the current road conditions information corresponding to the next second lane, and determining the target position on the next second lane according to the current driving state information, the expected driving state information and the current road conditions information.

In this step, the continuous lane change control system acquires the current driving state information of the vehicle at the current position based on real-time monitoring of the vehicle. The current driving state information of the vehicle at the current position includes the current orientation of the front of the vehicle, the current speed of the vehicle, and the current acceleration of the vehicle. The continuous lane change control system determines the expected driving state information of the vehicle in the next second lane according to preset rules. The expected driving state information includes the expected speed of the vehicle and the expected acceleration of the vehicle. The continuous lane change control system obtains the current road conditions information corresponding to the next second lane based on sensors on the vehicle. The current road conditions information corresponding to the next second lane includes the current positions of other vehicles in the next second lane, the current speeds of other vehicles, and the current accelerations of other vehicles. The continuous lane change control system determines the target position in the next second lane according to the current driving state information, the expected driving state information

and the current road conditions information.

Step S3012, determining a first curvature of the vehicle at the current position based on the current driving state information, and determining a second curvature of the vehicle at the target position based on the expected driving state information.

In this step, the current driving state information also includes the current steering wheel angle of the vehicle. The continuous lane change control system obtains the wheelbase information of the vehicle and calculates the first curvature of the vehicle at the current position based on the current steering wheel angle of the vehicle and the wheelbase information of the vehicle. The expected driving state information also includes the expected steering wheel angle of the vehicle. The continuous lane change control system obtains the wheelbase information of the vehicle and calculates the second curvature of the vehicle at the target position based on the expected steering wheel angle of the vehicle and the wheelbase information of the vehicle.

For example, the derivative of the vehicle's turning radius is the curvature of the vehicle, and the formula for calculating the turning radius is $R=L/\tan\theta$, where $R$ is the turning radius, $L$ is the vehicle's wheelbase information, and $\theta$ is the vehicle's steering wheel angle. The continuous lane change control system can calculate the vehicle's turning radius at the current position and the turning radius at the target position based on the above formula. Subsequently, the system takes the derivative of the turning radius at the current position to obtain the first curvature of the vehicle at the current position, and takes the derivative of the turning radius at the target position to obtain the second curvature of the vehicle at the current position. It should be noted that the second curvature is usually the same as the curvature of the lane where the target position is located.

Step S3013, determining a set of planned trajectories based on the first curvature, the second curvature, the current position, and the target position, and calculating a curvature change rate of each planned trajectory in the set of planned trajectories.

In this step, the continuous lane change control system determines a set of planned trajectories according to the first curvature, the second curvature, the current position and the target position, and calculates the curvature change rate of each planned trajectory in the set of planned trajectories. For example, for each planned trajectory, the continuous lane change control system divides it into several segments according to a preset division rule, obtains the curvature corresponding to each segment, and calculates the curvature change rate corresponding to the planned trajectory based on the curvature corresponding to each segment.

Step S3014: comparing the curvature change rates of the planned trajectories, and determining the planned trajectory with the smallest curvature change rate as a lane-changing trajectory based on a comparison result.

In this step, after obtaining the curvature change rate of each planned trajectory in the planned trajectory set, the continuous lane change control system compares the curvature change rate of each lane change trajectory. Based on the comparison result, the planned trajectory with the smallest curvature change rate is determined as the lane change trajectory. It should be noted that the smaller the curvature change rate, the gentler the curvature of the planned trajectory, and the higher the comfort level of the passengers.

Step S302, controlling the vehicle to perform the continuous lane change from the current position to a next second lane according to the lane change trajectory, and continuing to determine whether the continuous lane change condition is met, the next second lane being an adjacent lane of the second lane adjacent to the first lane in the direction of the target lane.

In this embodiment, after determining the lane change trajectory, the continuous lane change control system controls the vehicle to continuously change lanes from the current position to the next second lane according to the lane change trajectory, and continues to determine whether the continuous lane change condition is met. The next second lane is an adjacent lane of the second lane adjacent to the first lane in the direction of the target lane from. It can be understood that at the current position, the vehicle's front direction is at an angle with the lane's forward direction, and the continuous lane change control system uses the vehicle's front direction in the current position as the starting direction, and controls the vehicle to continuously change lanes from the current position to the next second lane according to the lane change trajectory.

Exemplarily, as shown in FIG. 7, assuming that there is lane-4 (not shown in the figure) on the right side of lane-3, and lane-4 is the target lane that the vehicle needs to reach. After determining the lane change trajectory (the newly planned lane change trajectory), the continuous lane change control system controls the vehicle to change lanes from the current position (the current position of the vehicle) along the lane change trajectory to lane-3, and during the lane change process, continues to determine whether the continuous lane change condition is met. When it is determined that the continuous lane change condition is met, the system re-determines the current position of the vehicle, and then determines a lane change trajectory from the current position of the vehicle to the target position on lane-4, and controls the vehicle to change lanes from the current position to lane-4 along the lane change trajectory.

Step S303, controlling the vehicle to change lanes to the target lane until it is determined that the next second lane is the target lane.

In this embodiment, when the continuous lane change control system is controlling the vehicle to change lanes continuously, if it determines that the next second lane is the target lane, that is, when determining the lane change trajectory corresponding to the target position from the current position of the vehicle to the target position on the target lane, the continuous lane change control system stops determining whether the continuous lane change conditions are met, and then controls the vehicle to change lanes to the target lane.

The continuous lane change control system of this embodiment determines the current position and target position of the vehicle, and calculates the first curvature corresponding to the current position and the second curvature corresponding to the target position, determines a set of planned trajectories according to the first curvature, the second curvature, the current position and the target position, and calculates the curvature change rate of each planned trajectory in the set of planned trajectories, compares the curvature change rate of each lane change trajectory, and determines the planned trajectory with the smallest curvature change rate as the lane change trajectory according to the comparison result, and then controls the vehicle to change lanes according to the lane change trajectory. By determining the planned trajectory with the smallest curvature change rate as the lane change trajectory, the smaller the curvature change rate of the lane change trajectory, the smoother the lane change trajectory, and improves the comfort of the driver and passengers during the lane change process.

In an embodiment, as shown in FIG. 8, based on the first to third embodiments of the continuous lane change control method of the present application, a fourth embodiment of the continuous lane change control method of the present application is proposed.

The fourth embodiment of the continuous lane change control method is different from the first to third embodiments of the continuous lane change control method in that the step of controlling the vehicle to change lanes to the target lane includes steps S3031 to S3033.

Step S3031, obtaining the position information and a heading angle of the vehicle.

In this embodiment, after the vehicle changes lanes continuously, it finally changes lanes to the target lane. The continuous lane change control system obtains the driving information of the vehicle and determines the position information and heading angle of the vehicle according to the driving information. It should be noted that the heading angle of the vehicle is the angle between the front orientation of the vehicle and the direction of the target lane.

Step S3032, calculating a distance between the position information and a center line of the target lane, comparing the distance with a second preset distance threshold, and comparing the heading angle with a preset angle threshold.

Step S3033: determining that the vehicle has completed the lane change to the target lane, if the distance is less than the second preset distance threshold and the heading angle is less than the preset angle threshold.

In step S3032 to step S3033, the continuous lane change control system calculates the distance between the vehicle's position information and the center line of the target lane, and compares the distance with the second preset distance threshold, and compares the vehicle's heading angle with the preset angle threshold. If the continuous lane change control system determines that the distance is less than the second preset distance threshold and the heading angle is less than the preset angle threshold, it determines that the vehicle has completed the lane change to the target lane. If the continuous lane change control system determines that the distance is not less than the second preset distance threshold or the heading angle is not less than the preset angle threshold, it determines that the vehicle has not completed the lane change to the target lane. It can be understood that the continuous lane change control system continuously obtains the vehicle's position information and heading angle during the process of the vehicle changing lanes to the target lane, and then determines whether the vehicle has completed the lane change to the target lane.

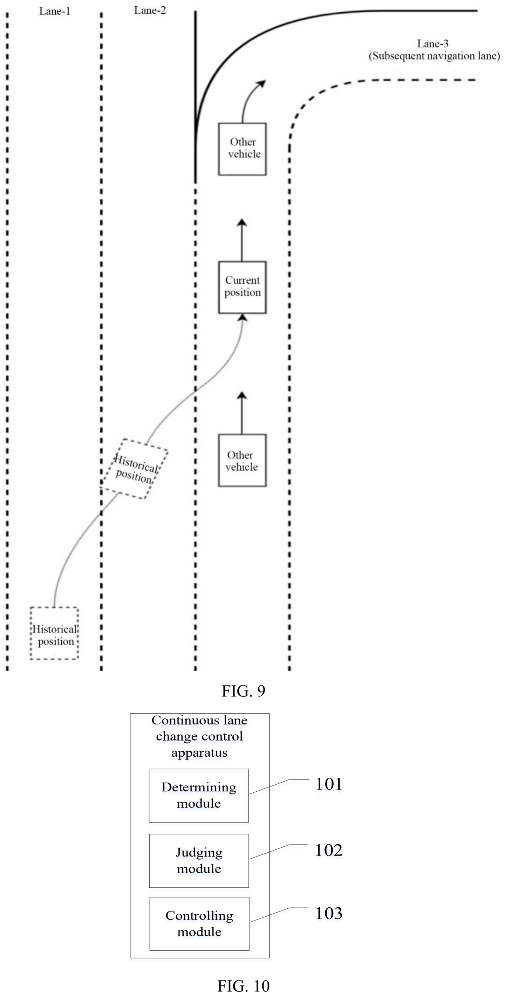

Exemplarily, as shown in FIG. 9, the current position of the vehicle is in lane-3 (target lane). At this time, the vehicle is on the center line of the target lane, and the distance between the vehicle and the center line of the target lane is less than the second preset distance threshold. The front of the vehicle has been aligned, that is, the heading angle of the vehicle is 0, which is less than the preset angle threshold. At this point, the continuous lane change control system determines that the vehicle has completed the lane change to the target lane.

The continuous lane change control system of this embodiment continuously obtains the vehicle's position information and heading angle during the process of the vehicle changing lanes to the target lane, and then determines whether the vehicle has completed the lane change to the target lane, thereby improving the efficiency and accuracy of determining the completion of the continuous lane change.

As shown in FIG. 10, the present application further provides a continuous lane change control apparatus. The continuous lane change control apparatus of the present application includes:

> a determining module 101, configured to determine a target lane, when a lane change instruction is received during a process of a vehicle traveling in a first lane, based on the lane change instruction, wherein there is at least one second lane between the first lane and the target lane;
> a determination module 102, configured to control the vehicle to change lanes from the first lane to the second lane adjacent to the first lane when a lane change condition is met, and to determine whether a continuous lane change condition is met; and
> a controlling module 103, configured to, if the continuous lane change condition is met, control the vehicle to perform continuous lane change until the vehicle reaches the target lane.

In an embodiment, the determination module is further configured to:

acquire a current position of the vehicle and an end position of the target lane, and determine a remaining lane change distance based on the current position and the end position, wherein the end position is a starting point of a curve of the target lane;

if the remaining lane change distance is less than a first preset distance threshold, execute the step of determining whether the continuous lane change condition is met.

In an embodiment, the determination module is further configured to:

determine whether there is a lane in a direction of the target lane from the second lane adjacent to the first lane, whether a lane line on the side of the second lane adjacent to the first lane away from the first lane is a lane line that permits lane change, and whether there is space for lane change in current road conditions;

determine that the continuous lane change condition is met, if there is a lane in the direction of the target lane from the second lane adjacent to the first lane, the lane line on the side of the second lane adjacent to the first lane away from the first lane permits lane change, and there is space for lane change in the current road conditions; and

determine that the continuous lane change condition is not met, if there is no lane in the direction of the target lane from the second lane adjacent to the first lane, or the lane line on the side of the second lane adjacent to the first lane away from the first lane does not permit lane change, or there is no space for lane change in the current road conditions.

In an embodiment, the determination module is further configured to:

acquire driving information of the vehicle, and determine whether the vehicle has completed the lane change from the first lane to the second lane adjacent to the first lane according to the driving information;

if the lane change has not been completed, re-execute the step of determining whether the continuous lane change condition is met;

if the lane change has been completed, designating the current lane of the vehicle as a new first lane, and when it is determined that there is at least one second lane between the new first lane and the target lane, re-execute the steps of controlling the vehicle to change lanes from the first lane to the second lane adjacent to the first lane when the lane change condition is met and determining whether the continuous lane change condition is met.

In an embodiment, the controlling module is further configured to:

if the continuous lane change condition is met, determine a lane change trajectory;

control the vehicle to perform the continuous lane change from a current position to a next second lane according to the lane change trajectory, and continue to determine whether the continuous lane change condition is met, the next second lane being an adjacent lane of the second lane adjacent to the first lane in the direction of the target lane; and

control the vehicle to change lanes to the target lane until it is determined that the next second lane is the target lane.

In an embodiment, the controlling module further includes a determining module configured to:

acquire current driving state information of the vehicle at the current position, expected driving state information of the vehicle at a target position, and current road conditions information corresponding to the next second lane, and determine the target position on the next second lane based on the current driving state information, the expected driving state information, and the current road conditions information;

determine a first curvature of the vehicle at the current position based on the current driving state information, and determine a second curvature of the vehicle at the target position based on the expected driving state information;

determine a set of planned trajectories based on the first curvature, the second curvature, the current position, and the target position, and calculate a curvature change rate of each planned trajectory in the set of planned trajectories; and

compare the curvature change rates of the planned trajectories, and determine the planned trajectory with the smallest curvature change rate as a lane-changing trajectory based on a comparison result.

In an embodiment, the controlling module further includes a calculating module configured to:

obtain position information and a heading angle of the vehicle;

calculate a distance between the position information and a center line of the target lane, compare the distance with a second preset distance threshold, and compare the heading angle with a preset angle threshold; and

determine that the vehicle has completed the lane change to the target lane, if the distance is less than the second preset distance threshold and the heading angle is less than the preset angle threshold.

The present application also provides a continuous lane change control system.

The continuous lane change control system of the present application includes: a memory, a processor, and a continuous lane change control program stored in the memory and executable on the processor, the continuous lane change control program implementing the steps of the continuous lane change control method as described above when executed by the processor.

The method implemented when the continuous lane change control program running on the processor is executed can refer to the various embodiments of the continuous lane change control method of the present application, and will not be repeated here.

The present application also provides a computer-readable storage medium.

A continuous lane change control program is stored on the computer-readable storage medium of the present application, and when the continuous lane change control program is executed by the processor, the steps of the above continuous lane change control method are implemented.

The method implemented when the continuous lane change control program running on the processor is executed can refer to the various embodiments of the continuous lane change control method of the present application, and will not be repeated here.

It should be noted that, in this article, the terms "include", "comprises" or any other variations thereof are intended to cover non-exclusive inclusion, so that a process, method, article or system including a series of elements includes not only those elements, but also other elements not explicitly listed, or also includes elements inherent to such a process, method, article or system. In the absence of further restrictions, an element defined by the sentence "comprises a ..." does not exclude the existence of other identical elements in the process, method, article or system including the element.

The serial numbers of the above-mentioned embodiments of the present application are for description only and do not represent the advantages or disadvantages of the embodiments.

Through the description of the above implementation methods, those skilled in the art can clearly understand that the above-mentioned embodiment methods can be implemented by means of software plus a necessary general hardware platform, and of course by hardware, but in many cases, the former is a better implementation method. Based on such an understanding, the technical solution of the present application is essentially or the part that contributes to the prior art can be embodied in the form of a software product, which is stored in a storage medium (such as ROM/RAM, magnetic disk, optical disk) as described above, and includes a number of instructions for a terminal device (which can be a mobile phone, computer, server, or network device, etc.) to execute the methods described in each embodiment of the present application.

The embodiments of the present application have been described above, and the above description is exemplary, not exhaustive, and is not limited to the disclosed embodiments. Many modifications and changes will be apparent to those of ordinary skill in the art without departing from the scope and spirit of the described embodiments. The selection of terms used herein is intended to best explain the principles of the embodiments, practical applications, or improvements to the technology in the market, or to enable other persons of ordinary skill in the art to understand the embodiments disclosed herein.

## Claims

1. A continuous lane change control method, **characterized in that** the method comprises:

    determining a target lane based on a lane change instruction, when the lane change instruction is received while a vehicle is traveling in a first lane, wherein there is at least one second lane between the first lane and the target lane;
    controlling the vehicle to change lanes from the first lane to the second lane adjacent to the first lane when a lane change condition is met, and determining whether a continuous lane change condition is met; and
    if the continuous lane change condition is met, controlling the vehicle to perform a continuous lane change until the vehicle reaches the target lane.

2. The continuous lane change control method according to claim 1, wherein before the step of determining whether the continuous lane change condition is met, the method comprises:

    acquiring a current position of the vehicle and an end position of the target lane, and determining a remaining lane change distance based on the current position and the end position, wherein the end position is a starting point of a curve of the target lane; and
    if the remaining lane change distance is less than a first preset distance threshold, executing the step of determining whether the continuous lane change condition is met.

3. The continuous lane change control method according to claim 1 or 2, wherein the step of determining whether the continuous lane change condition is met comprises:

determining whether there is a lane in a direction of the target lane from the second lane adjacent to the first lane, whether a lane line on a side of the second lane adjacent to the first lane away from the first lane is a lane line that permits lane change, and whether there is space for lane change in current road conditions;

determining that the continuous lane change condition is met, if there is a lane in the direction of the target lane from the second lane adjacent to the first lane, the lane line on the side of the second lane adjacent to the first lane away from the first lane permits lane change, and there is space for lane change in the current road conditions; and

determining that the continuous lane change condition is not met, if there is no lane in the direction of the target lane from the second lane adjacent to the first lane, or the lane line on the side of the second lane adjacent to the first lane away from the first lane does not permit lane change, or there is no space for lane change in the current road conditions.

4. The continuous lane change control method according to claim 3, wherein after the step of determining that the continuous lane change condition is not met, the method further comprises:

acquiring driving information of the vehicle, and determining whether the vehicle has completed the lane change from the first lane to the second lane adjacent to the first lane based on the driving information;

if the lane change has not been completed, re-executing the step of determining whether the continuous lane change condition is met;

if the lane change has been completed, designating the current lane of the vehicle as a new first lane, and when it is determined that there is at least one second lane between the new first lane and the target lane, re-executing the steps of controlling the vehicle to change lanes from the first lane to the second lane adjacent to the first lane when the lane change condition is met and determining whether the continuous lane change condition is met.

5. The continuous lane change control method according to claim 1, wherein the step of controlling the vehicle to perform the continuous lane change until the vehicle reaches the target lane if the continuous lane change condition is met comprises:

if the continuous lane change condition is met, determining a lane change trajectory;

controlling the vehicle to perform the continuous lane change from a current position to a next second lane according to the lane change trajectory, and continuing to determine whether the continuous lane change condition is met, the next second lane being an adjacent lane of the second lane adjacent to the first lane in the direction of the target lane; and

controlling the vehicle to change lanes to the target lane until it is determined that the next second lane is the target lane.

6. The continuous lane change control method according to claim 5, wherein the step of determining the lane change trajectory comprises:

acquiring current driving state information of the vehicle at the current position, expected driving state information of the vehicle at a target position, and current road conditions information corresponding to the next second lane, and determining the target position on the next second lane based on the current driving state information, the expected driving state information, and the current road conditions information;

determining a first curvature of the vehicle at the current position based on the current driving state information, and determining a second curvature of the vehicle at the target position based on the expected driving state information;

determining a set of planned trajectories based on the first curvature, the second curvature, the current position, and the target position, and calculating a curvature change rate of each planned trajectory in the set of planned trajectories; and

comparing the curvature change rates of the planned trajectories, and determining the planned trajectory with the smallest curvature change rate as a lane-changing trajectory based on a comparison result.

7. The continuous lane change control method according to claim 5, wherein the step of controlling the vehicle to change lanes to the target lane comprises:

obtaining position information and a heading angle of the vehicle;

calculating a distance between the position information and a center line of the target lane, comparing the distance with a second preset distance threshold, and comparing the heading angle with a preset angle threshold; and

determining that the vehicle has completed the lane change to the target lane, if the distance is less than the second preset distance threshold and the heading angle is less than the preset angle threshold.

8.  A continuous lane change control apparatus, **characterized in that** the apparatus comprises:

    a determining module, configured to determine a target lane based on a lane change instruction, when the lane change instruction is received while a vehicle is traveling in a first lane, wherein there is at least one second lane between the first lane and the target lane;
    a determination module, configured to control the vehicle to change lanes from the first lane to the second lane adjacent to the first lane when a lane change condition is met, and to determine whether a continuous lane change condition is met; and
    a controlling module, configured to, if the continuous lane change condition is met, control the vehicle to perform continuous lane change until the vehicle reaches the target lane.

9.  The continuous lane change control apparatus according to claim 8, wherein the determination module is further configured to:

    acquire a current position of the vehicle and an end position of the target lane, and determine a remaining lane change distance based on the current position and the end position, wherein the end position is a starting point of a curve of the target lane; and
    if the remaining lane change distance is less than a first preset distance threshold, execute the step of determining whether the continuous lane change condition is met.

10. The continuous lane change control apparatus according to claim 8, wherein the determination module is further configured to:

    determine whether there is a lane in a direction of the target lane from the second lane adjacent to the first lane, whether a lane line on a side of the second lane adjacent to the first lane away from the first lane is a lane line that permits lane change, and whether there is space for lane change in current road conditions;
    determine that the continuous lane change condition is met, if there is a lane in the direction of the target lane from the second lane adjacent to the first lane, the lane line on the side of the second lane adjacent to the first lane away from the first lane permits lane change, and there is space for lane change in the current road conditions; and
    determine that the continuous lane change condition is not met, if there is no lane in the direction of the target lane from the second lane adjacent to the first lane, or the lane line on the side of the second lane adjacent to the first lane away from the first lane does not permit lane change, or there is no space for lane change in the current road conditions.

11. The continuous lane change control apparatus according to claim 8, wherein the controlling module is further configured to:

    if the continuous lane change condition is met, determine a lane change trajectory;
    control the vehicle to perform the continuous lane change from a current position to a next second lane according to the lane change trajectory, and continue to determine whether the continuous lane change condition is met, the next second lane being an adjacent lane of the second lane adjacent to the first lane in the direction of the target lane; and
    control the vehicle to change lanes to the target lane until it is determined that the next second lane is the target lane.

12. The continuous lane change control apparatus according to claim 8, wherein the controlling module further comprises a determining submodule configured to:

    acquire current driving state information of the vehicle at the current position, expected driving state information of the vehicle at a target position, and current road conditions information corresponding to the next second lane, and determine the target position on the next second lane based on the current driving state information, the expected driving state information, and the current road conditions information;
    determine a first curvature of the vehicle at the current position based on the current driving state information, and determine a second curvature of the vehicle at the target position based on the expected driving state information;
    determine a set of planned trajectories based on the first curvature, the second curvature, the current position, and the target position, and calculate a curvature change rate of each planned trajectory in the set of planned trajectories; and
    compare the curvature change rates of the planned trajectories, and determine the planned trajectory with the smallest curvature change rate as a lane-changing trajectory based on a comparison result.

13. A continuous lane change control system, comprising:
    a memory, a processor, and a continuous lane change control program stored in the memory and executable on the processor, wherein the continuous lane change control program, when executed by the processor, implements the steps of the continuous lane change control method as claimed in any one of claims 1 to 7.

14. A computer-readable storage medium, having stored thereon a continuous lane change control program which, when executed by a processor, causes the processor to carry out the steps of the continuous lane change control method of any one of claims 1 to 7.

1005

Operating system

Network communication module

User interface module

Continuous lane change control program

Memory

1001

Processor

1002

1003

User interface

Network interface

1004

FIG. 1

| Determining a target lane according to a lane change instruction, when the lane change instruction is received while a vehicle is traveling in a first lane, wherein there is at least one second lane between the first lane and the target lane | S10 |

| Controlling the vehicle to change lanes from the first lane to the second lane adjacent to the first lane when a lane change condition is met, and judging whether a continuous lane change condition is met | S20 |

| Controlling the vehicle to perform the continuous lane change if the continuous lane change condition is met, until the vehicle changes lanes to the target lane | S30 |

FIG. 2

Lane-1    Lane-2

Lane-3
(Subsequent navigation lane)

Target
position

Planned
lane
change
trajectory

Current
position

FIG. 3

Acquiring a current position of the vehicle and an end position of the target lane, and determining a remaining lane change distance according to the current position and the end position, wherein the end position is a starting point of a curve of the target lane — a

If the remaining lane change distance is less than a first preset distance threshold, executing a step: judging whether the continuous lane change condition is met — b

FIG. 4

Lane-1    Lane-2

Lane-3
(Subsequent navigation lane)

Remaining lane
change distance is
less than threshold

Target
position

Current
position

Historical
position

FIG. 5

| If the continuous lane change condition is met, determining the lane change trajectory | S301 |

↓

| Controlling the vehicle to perform the continuous lane change from the current position to a next second lane according to the lane change trajectory, and continuing to judge whether the continuous lane change condition is met, the next second lane being a side lane of the second lane adjacent to the first lane in a direction toward the target lane | S302 |

↓

| Controlling the vehicle to change lanes to the target lane until it is determined that the next second lane is the target lane | S303 |

FIG. 6

Lane-1  Lane-2

Lane-3
(Subsequent navigation lane)

Other
vehicle

New
target
position

*Newly planned lane change trajectory*

Original
target
position

Current
position

Other
vehicle

Historical
position

FIG. 7

```
Obtaining the position information and a heading angle of          S3031
the vehicle
```

↓

```
Calculating a distance between the position information and
a center line of the target lane, comparing the distance with a    S3032
second preset distance threshold, and comparing the heading
angle with a preset angle threshold
```

↓

```
Determining that the vehicle has completed the lane change
to the target lane, if the distance is less than the second         S3033
preset distance threshold and the heading angle is less than
the preset angle threshold
```

FIG. 8

FIG. 9

FIG. 10

## INTERNATIONAL SEARCH REPORT

| | International application No. |
|---|---|
| | **PCT/CN2024/102833** |

**A.     CLASSIFICATION OF SUBJECT MATTER**

B60W30/18(2012.01)i;  B60W50/00(2006.01)i

According to International Patent Classification (IPC) or to both national classification and IPC

**B.     FIELDS SEARCHED**

Minimum documentation searched (classification system followed by classification symbols)

IPC:  B60W

Documentation searched other than minimum documentation to the extent that such documents are included in the fields searched

Electronic data base consulted during the international search (name of data base and, where practicable, search terms used)

CNKI, CNTXT, WPABSC, ENTXTC, WPABS, DWPI: 小鹏, 连续, 多次, 变, 换, 改, 道, 线, 车, 轨迹, 路线, 距离, 曲率; continu+, multiple, chang+, lane, line, vehicle, track+, path, distance, curvature

**C.     DOCUMENTS CONSIDERED TO BE RELEVANT**

| Category* | Citation of document, with indication, where appropriate, of the relevant passages | Relevant to claim No. |
|---|---|---|
| PX | CN 116853252 A (GUANGZHOU XPENG AUTOMATIC DRIVING TECHNOLOGY CO., LTD.) 10 October 2023 (2023-10-10) <br> description, paragraphs [0077]-[0188], and figures 1-10 | 1-14 |
| PX | CN 116424330 A (MERCEDES-BENZ GROUP AG) 14 July 2023 (2023-07-14) <br> description, paragraphs [0043]-[0091], and figures 1-5 | 1-3, 5, 7-11, 13, 14 |
| X | US 2021237739 A1 (NISSAN MOTOR CO., LTD.) 05 August 2021 (2021-08-05) <br> description, paragraphs [0032]-[0155], and figures 1-11D | 1-3, 5, 7-11, 13, 14 |
| X | CN 113525379 A (HONDA MOTOR CO., LTD.) 22 October 2021 (2021-10-22) <br> description, paragraphs [0013]-[0096], and figures 1-8 | 1-3, 5, 7-11, 13, 14 |
| A | CN 115876216 A (ZHIDAO NETWORK TECHNOLOGY (BEIJING) CO., LTD.) 31 March 2023 (2023-03-31) <br> entire document | 1-14 |
| A | DE 102020117159 A1 (BAYERISCHE MOTOREN WERKE AG.) 30 December 2021 (2021-12-30) <br> entire document | 1-14 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 September 2024** | **24 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102833**

| Patent document cited in search report | | | Publication date (day/month/year) | Patent family member(s) | | | Publication date (day/month/year) |
|---|---|---|---|---|---|---|---|
| CN | 116853252 | A | 10 October 2023 | None | | | |
| CN | 116424330 | A | 14 July 2023 | None | | | |
| US | 2021237739 | A1 | 05 August 2021 | US | 11731632 | B2 | 22 August 2023 |
| | | | | WO | 2020035896 | A1 | 20 February 2020 |
| | | | | RU | 2760986 | C1 | 02 December 2021 |
| | | | | EP | 3838700 | A1 | 23 June 2021 |
| | | | | EP | 3838700 | A4 | 01 September 2021 |
| | | | | EP | 3838700 | B1 | 14 June 2023 |
| | | | | JPWO | 2020035896 | A1 | 10 August 2021 |
| | | | | JP | 7004077 | B2 | 21 January 2022 |
| CN | 113525379 | A | 22 October 2021 | US | 2021300377 | A1 | 30 September 2021 |
| | | | | US | 12030500 | B2 | 09 July 2024 |
| | | | | JP | 2023083342 | A | 15 June 2023 |
| | | | | JP | 7508635 | B2 | 01 July 2024 |
| | | | | JP | 2021160541 | A | 11 October 2021 |
| | | | | JP | 7260503 | B2 | 18 April 2023 |
| CN | 115876216 | A | 31 March 2023 | None | | | |
| DE | 102020117159 | A1 | 30 December 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023108177070